# EUROPEAN PATENT SPECIFICATION

(11) **EP 2 567 119 B1**
(45) Date of publication and mention of the grant of the patent: **03.12.2014**
(21) Application number: 11729706.9
(22) Date of filing: 28.04.2011
(51) Int. Cl.: F16D 65/12

(54) **DISC BRAKING DEVICE FOR VEHICLES**
SCHEIBENBREMSVORRICHTUNG FÜR FAHRZEUGE
DISPOSITIF DE FREINAGE À DISQUES POUR VÉHICULES

(30) Priority: 06.05.2010 IT MI20100813
(43) Date of publication of application: 13.03.2013
(73) Proprietor: Freni Brembo S.p.A., 24035 Curno (Bergamo) (IT)
(72) Inventor: LAVEZZI, Roberto, I-24030 Brembate di Sopra, Bergamo (IT)
(74) Representative: Crippa, Paolo Ernesto
(86) International application number: PCT/IB2011/051870
(87) International publication number: WO 2011/138714

(56) References cited:
- EP-A1- 1 074 757
- DE-A1- 19 850 180
- DE-U1- 29 906 138

## Description

The present invention refers to a disc braking device particularly suitable, but not necessarily intended, for motorcycles.

More specifically, the present invention refers to a disc braking device that comprises a caliper combined with a disc able to slide axially with respect to its supports.

As known, braking devices are members capable of slowing down or stopping a vehicle or, in general a moving mass, transforming the kinetic energy of the vehicle into heat energy, through friction exerted by brake pads pressed by a caliper against braking surfaces of a disc.

A type of braking device in use both in motor vehicles and in motorcycles, is that using a disc consisting of a metallic brake disc astride of which acts a caliper fixed to the stub axle in an articulated manner or to the hub-carrier of the vehicle and provided with a braking lining generally known as pads.

The brake disc comprises a brake band, provided with braking surfaces on which the pads act, as well as a bell or hub connected to the axle of the wheel. In the case of applications for motorcycles, the bell is replaced with a plurality of bosses foreseen on the wheel of the vehicle and suitable for forming coupling surfaces for the disc.

The suitably actuated calipers press the pads against the brake band, and the braking action is produced by the friction between the pads and the brake band of the brake disc.

As known, braking devices can be of the type comprising a fixed brake disc with respect to its support, bell or bosses, and a caliper body that is also fixed, provided with opposite pistons that act on the brake pads, pushing them against the opposite braking surfaces of the disc.

Alternatively, braking devices can be of the type comprising fixed calipers equipped with means pressing on just one side, and suitable for pressing against pads, abutting them against a first braking surface of the disc that is axially floating with respect to its support to move and abut against the opposite fixed pad with respect to the caliper body.

Therefore, in the case of calipers with opposite piston or floating calipers with fixed disc, the coupling of the discs with the brake pads is geometrically rigid and does not allow a sufficient adaptation and self-alignment of the disc with respect to the pads to be carried out.

On the other hand, in the case of floating discs, the axial self-alignment between brake disc and brake pads is allowed by the possibility of moving the disc axially with respect to its support. In these fixed caliper and floating disc braking devices, the brake band, i.e. the disc on whose opposite parallel faces the brake pads exert their friction action, is not integral with the wheel hub, but engages with it in coaxial alignment by means of a mobile coupling that also allows a radial dilation, said dilation being exerted through the effect of the heating produced by the heat generated by friction. Said coupling is obtained through mutual engagement of radial slots, formed on the floating disc and centring elements engaged on the hub with interposition of cup-shaped elastic means having axial elastic deformation.

Devices of this type are for example known from document US 4662482, as well as from documents US 3692148, US 2005145452, WO 2004/063592, WO 03092592, GB 2093949, DE 102004035900, DE 102004034676 and IT MI1998A000062.

Devices are also known that, in addition to elastic return elements, also have elastic elements arranged tangentially between bosses and the disc.

A solution of this type is for example known in document EP 1 074 757.

Such elastic means allows the temporary axial alignment of the brake disc between the brake pads only at the moment of braking, which however disappears with the return to the rest position once the braking action is released thanks to the elastic return of the elastic elements.

This can cause discontinuous sliding contacts between brake disc and pads, also when the brake is not actuated, with consequent irregular wear and possibility of vibration phenomena, even of substantial size, known by the name "judder", occurring over time. Such phenomena in turn cause an accentuation of the irregularity of the wear conditions and finally a premature need to replace the brake disc.

This phenomenon, although smaller in size, is also present in the case of floating calipers and fixed disc, since the correct axial self-centring between the pads and the brake disc does not however allow the compensation of misalignments of the brake band brought about by non-uniform wear caused for example by thermal dilations.

Moreover, these devices with floating caliper body can have problems of functionality linked to possible difficulties in sliding of the calipers along their own support or bracket.

Although satisfactory from many points of view, these known braking devices do however have problems of functionality linked mainly to the non-uniform wear of the pads and of the braking surfaces also caused by the deformation brought about by the temperature changes undergone by the components of the device during and after the braking action. These deformations result in vibrations in the device that gradually accentuate the non-uniform wear of its components that in turn further intensifies the vibrations.

Moreover, in known devices in which the disc floats axially with respect to its support, in order to bring the disc back into a neutral position with respect to the brake pads, elastic means are used that are suitable for generating an axial thrust on the disc that when the braking action ends takes the disc back into its predetermined rest position or predetermined axial stroke, which however does not always coincide with a position such as to take the disc not in contact with the brake pads. DE 198 50180 discloses a disc braking device according to the preamble of claim 1.

The purpose of the present invention is to avoid the aforementioned drawbacks of known disc braking devices.

In particular, a purpose of the present invention is to provide a disc braking device, suitable for motorcycles, which is capable of reducing or eliminating the vibration phenomena generated during braking.

A further purpose of the present invention is to provide a disc braking device that is reliable, easy and cost-effective to manufacture and small in size, so as to be able to be applied even in cases in which the wheel-side bulk is critical.

A further purpose of the invention is to provide a braking device the components of which that are subject to wear are easy to mount onto and dismount from the vehicle.

In its most general aspect, the present invention makes it possible to obtain these and other purposes, which will become clear from the following description, through a disc braking device according to claim 1.

Thanks to the disc braking device according to the invention, the braking band is connected to the vehicle through means that allow it to dilate radially and at the same time that allow the axial positioning of the disc with respect to the bushing, controlling this movement through the friction that the elastic means exert between the radial seat and the bushing. No elastic action is generated by this device on the disc that after braking will remain in the equilibrium position into which it is brought during the braking action. In this way, upon the next braking action the pads will find the disc back in the optimal position to which it was brought in the previous braking.

This behaviour of the disc will allow a reduction in the thermal deformation, added to a great reduction in the generation of vibrations of the braking system.

In accordance with an embodiment the bushing has an edge that extends radially to it and suitable for creating an abutment surface for the disc that separates the disc from the connection device.

In this way, particular protection of the connection device is ensured, for example the bosses of a wheel of a motorcycle or the connection surfaces of a bell of a motor vehicle, thus reducing the wear of these components and therefore a further decrease in the probability of vibration phenomena of the braking device occurring.

Thanks to the disc braking device according to the invention, during operation in conditions with the braking device inoperative, the brake disc is positioned perfectly centred between the brake pads since it can slide axially along the wheel hub and is not subject to or influenced by further axial actions apart from those exerted by the brake pads.

In the condition with the braking device actuated, the pad(s) are thrusted by the piston cylinder system of the floating or fixed caliper against the braking band of the brake disc. Consequently, the brake disc is thrusted against the second pad in the case of a floating disc or it self-centres between the two pads that move against the opposite braking surfaces of the disc that once contact has been reached determine the braking action that is exerted substantially equally by both of the opposite braking pads. During the braking action, irrespective of the even non-uniform wear of the pads, the disc will adapt to its axial position perfectly centring itself between the two pads.

The possibility of axial sliding of the brake disc allows the automatic recovery of the wear of the pads, in particular of the fixed pad in the case of a floating disc device and of the pad that wears non-uniformly in the case of a fixed caliper or floating caliper device.

The operating concept of the braking device of the present invention therefore differs from both the fixed calipers and floating disc and from the fixed calipers with opposite pistons and floating calipers, since the force exerted by the pads in all three cases allows the disc to self-centre perfectly in the axial direction. The absence of any elastic return in the axial direction allows the equilibrium position reached by the disc to be maintained, said position being perfectly restored again at the next braking action.

In the case of application for a motorcycle, the brake disc is coaxial to the wheel hub and it is connected to the latter through a mobile coupling obtained through engagement of bosses of the wheel hub in radial slots of the brake disc with the interposition of the aforementioned elastic means, preferably band shaped.

The elasticity of the elastic means allows the circumferential or tangential clearance between the radial slots and the bushings fixed to the bosses of the wheel or to the bell to be recovered and determines the stable contact of the bushing at the dragging surface of the radial seat of the disc during braking of the braking band in the direction of forward travel of the vehicle. The force directed circumferentially and exerted by the elastic means on the radial slot and on the bushing by friction determines the permanence of the braking band in the position taken up during the active step of the braking even during the release step.

The mobile coupling between the disc and the wheel hub allows a correct radial thermal dilation of the brake disc, brought about by the heat produced by the dissipation by friction between pads and braking bands of the kinetic energy of the vehicle, and also ensures the correct centring of the brake disc between the pads, which act astride of it. It is also ensured that it is possible to vary the centring position in a sufficiently wide range, so as to allow the possibility of adaptation to the extent of wear of the pads over time.

The correct axial centring of the braking band between the pads ensures that the clearance that is created dynamically at the moment of release prevents any contact with sliding between the brake pads and the braking band, and thus avoids the occurrence of vibration phenomena. Moreover, the presence of the elastic means brings about the correct angular positioning of the brake disc, always in contact on the dragging surface of the radial slot. Its arrangement between the brake disc, for example made from steel, and the bushings fixed to the wheel, for example made from aluminium, through screw means, excludes the direct contact between the steel disc and the aluminium boss of the wheel, avoiding premature wearing phenomena by the wheel bosses that could result in further vibration phenomena for the braking system.

The braking device of the present invention makes it possible to obtain braking conditions with higher operating temperatures of the disc and at the same time smaller sizes that make it particularly suitable for critical applications in terms of bulk.

The braking device of the present invention also makes it possible to eliminate possible problems of functionality linked to the sliding coupling between caliper body and support.

The functional constructive characteristics of the braking device of the present invention can be better understood from the following description, in which reference is made to the attached tables of drawings that represent some preferred but not limiting embodiments thereof, and in which:

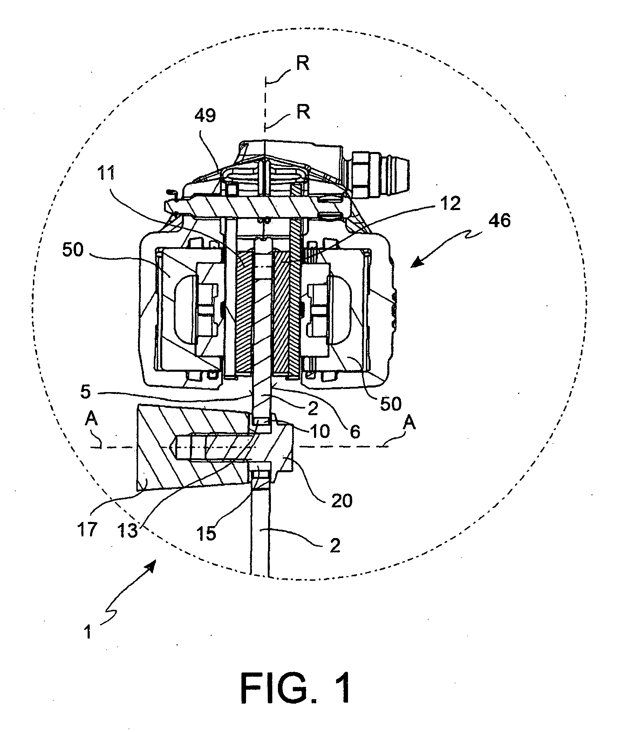

figure 1 represents a schematic view of a section of a braking device with fixed caliper body with opposite pistons and disc axially free to adapt to the optimal axial position for braking in the different operating conditions of wear of the pads;

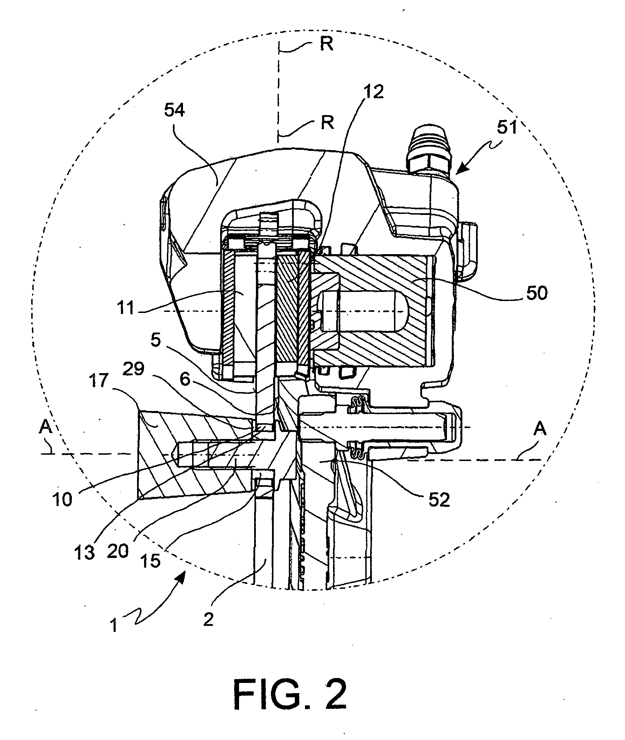

figure 2 represents a schematic section view of a floating caliper braking device in which the disc is able to slide axially so as to adapt its position and self-centre with respect to the pads during the braking actions irrespective of their different wear condition;

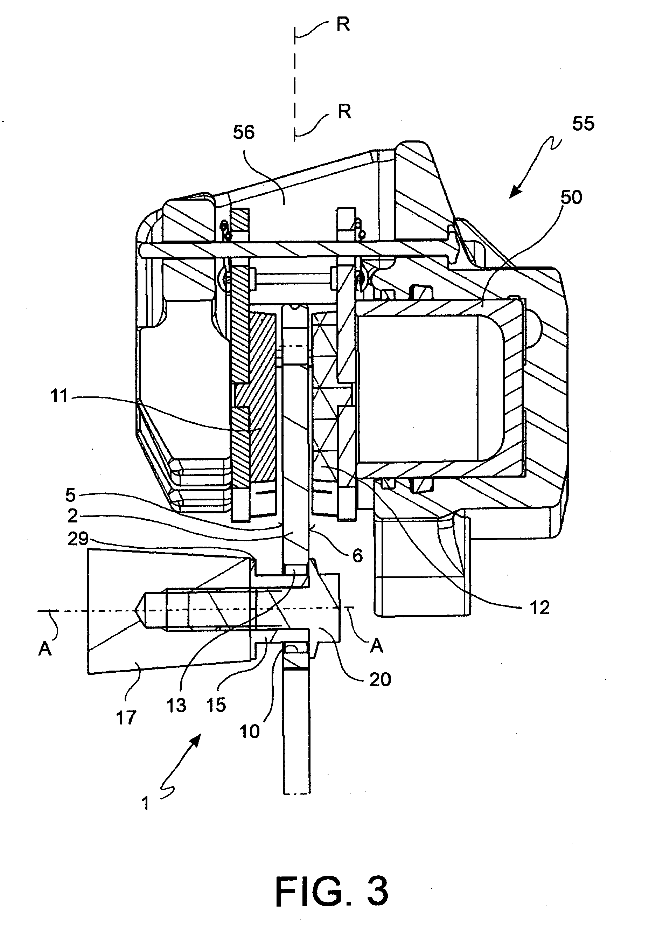

figure 3 represents a schematic section view of a braking device with a fixed caliper body equipped with elements pressing on a single side of the floating brake disc, in which a bushing inserted in a radial slit of the disc has an extended axial extension that is sufficient to allow an axial stroke of the brake disc that adequately compensates for the wear of the pad opposite the pressing means and still with respect to the fixed caliper body;

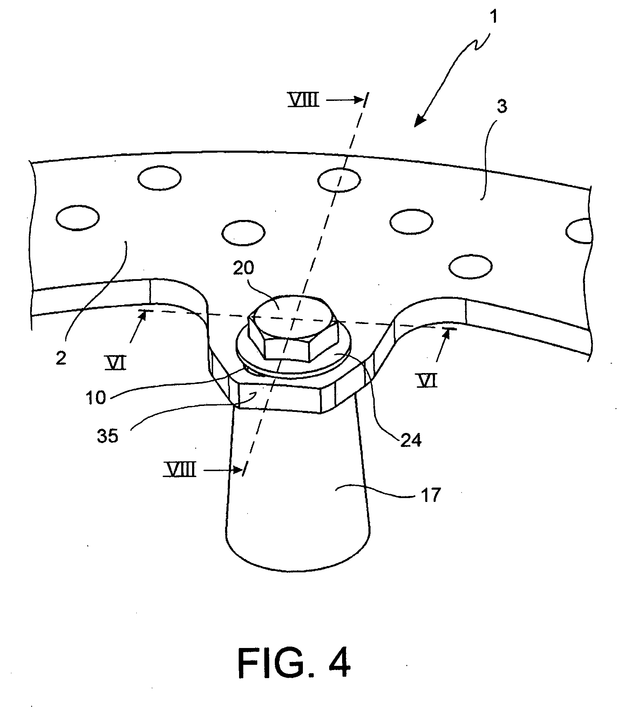

figure 4 illustrates a perspective view of a detail of a disc device comprising a brake band equipped with inner radial protuberances defining radial slots in which bushings are housed that are fixed to wheel bosses through screws and comprising elastic means arranged in the tangential direction between said seat and said bushing to elastically influence said bushing in abutment against the dragging surface;

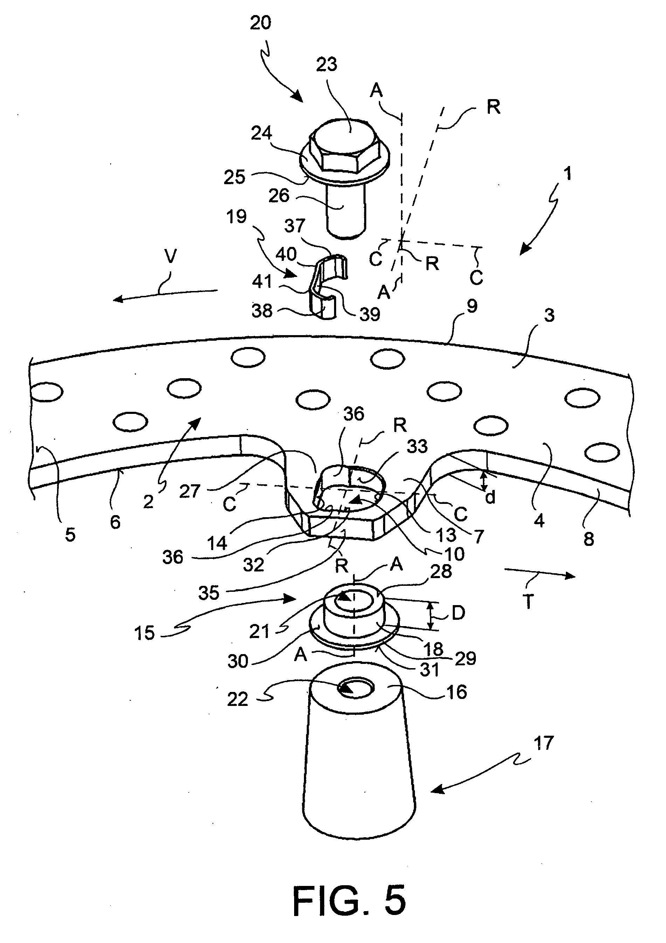

figure 5 illustrates a perspective view, partially in section and with parts separated, of the components making up the disc device of figure 4;

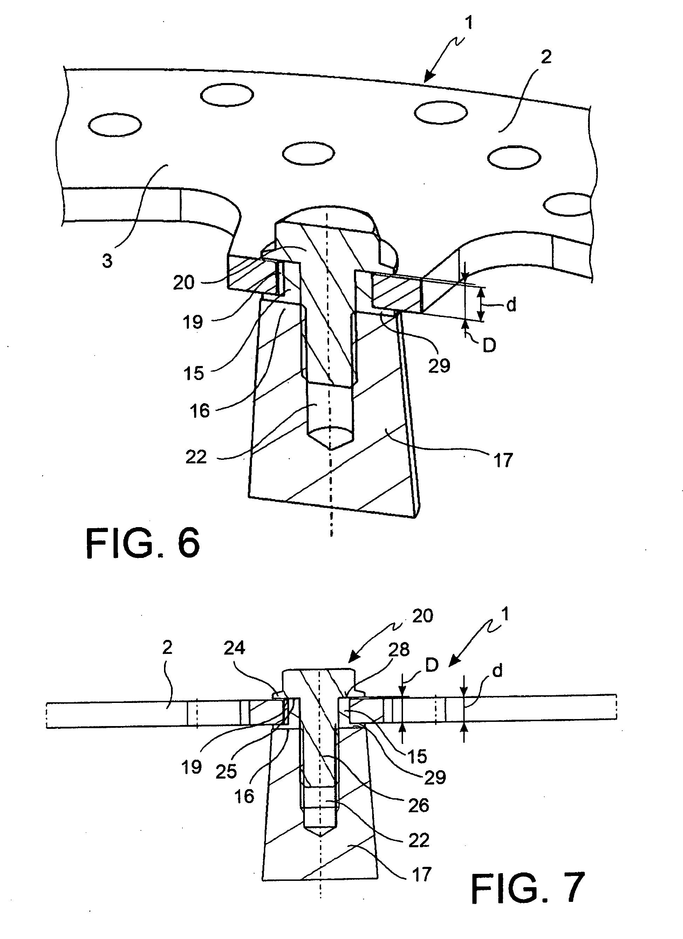

figure 6 illustrates a perspective view sectioned along the line VI-VI of figure 5 of a detail of the device of figure 4;
figure 7 illustrates the section of figure 5 in a side view;

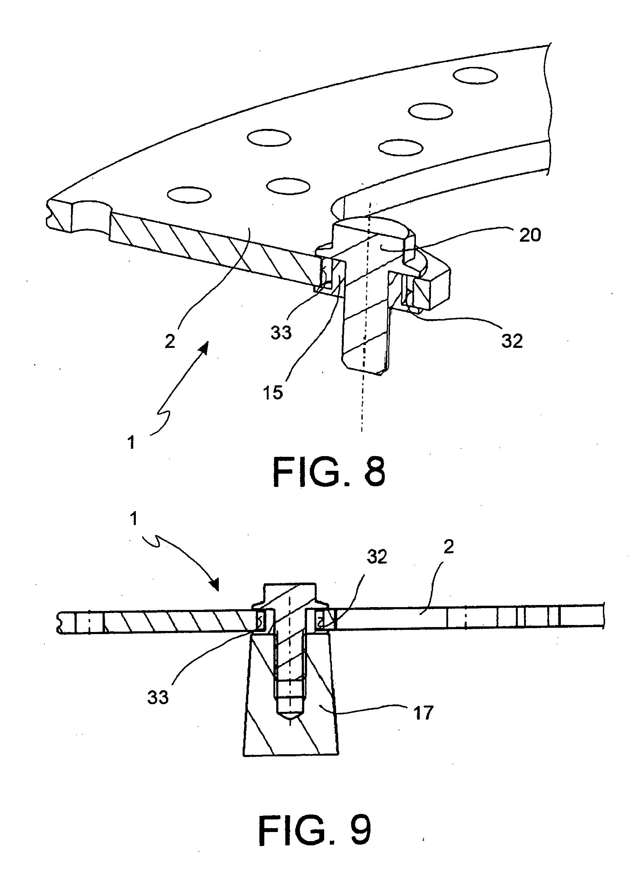

figure 8 illustrates a perspective view of a detail sectioned along the line VIII-VIII of figure 5 of the device of figure 4;
figure 9 illustrates a side view of the section of figure 8;

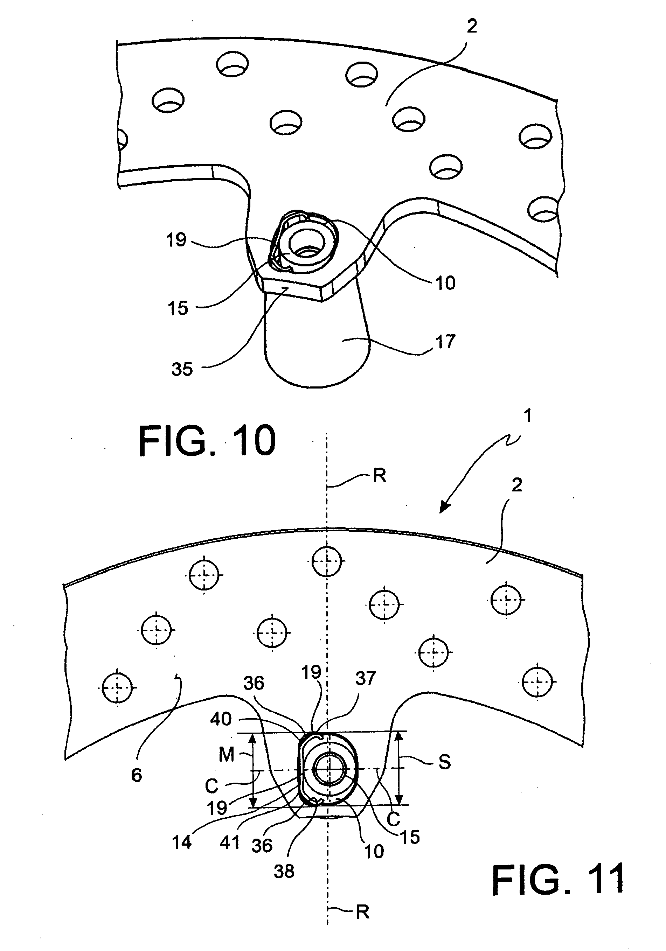

figure 10 represents a perspective view of a detail of the device of figure 4 in which the screw has been removed to better highlight the arrangement of the bushing and of the elastic means arranged between it and the radial seat;
figure 11 illustrates the detail of figure 10 in an axial view;

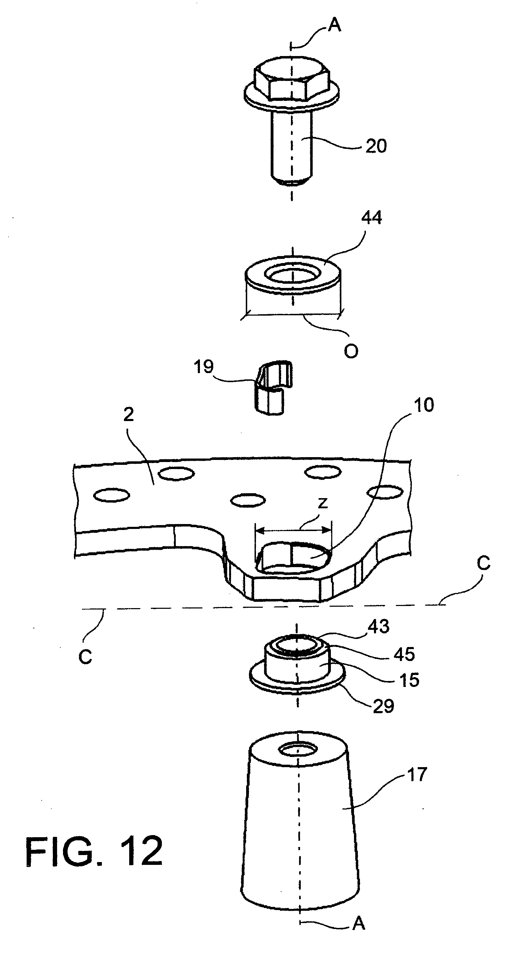

figure 12 illustrates a perspective view of a detail with separated parts of a disc device according to a further embodiment that foresees the interposition of a washer, able to be caulked at the opposite end to the boss of the wheel to the bushing, so as to axially define the stroke of the disc and constitute a premounted kit comprising the disc, the bushing inserted in the radial slot and the elastic means arranged between the slot and the bushing.

As can be seen from the figures, in accordance with a general embodiment, a disc device 1 comprises a brake disc 2.

Said brake disc 2 comprises an axial-symmetrical body that extends around a rotation axis A-A thereof.

Said body 3 comprises a brake band 4 that defines opposite braking surfaces 5, 6 arranged on parallel planes transversal to the rotation axis A-A.

In particular, the body comprises a brake band 4 that defines a first braking surface 5 and an opposite second braking surface 6.

In accordance with an embodiment, said body also comprises at least two connection portions 7.

In accordance with an embodiment, said connection portions 7 comprises radial protuberances facing the inner edge of the brake band 8, projecting towards the rotation axis of the disc A-A.

In accordance with a general embodiment, said brake band 4 defines an axial direction A-A parallel to or coinciding with its rotation axis, a tangential or circumferential direction C-C parallel to one of the braking surfaces and transversal to the axial direction

A-A, as well as a radial direction R-R perpendicular to the tangential direction C-C and to the axial direction A-A.

Said brake band has an inner radial edge 8 and an opposite outer radial edge 9.

Said brake band 4 comprises at least two radial seats 10.

In accordance with an embodiment, each radial seat 10 is made in said connection portion 7.

In accordance with an embodiment, said radial seat 10 is made in a portion of the disc body 3 that is radially inner, i.e. facing towards the rotation axis A-A of the disc, with respect to the brake band 4 and particularly towards the surfaces on which pads 11, 12 act defining the first braking surface 5 and the second opposite braking surface 6.

Each of said radial seats 10 defines, or is defined by, a first surface or dragging surface 13 and an opposite second surface or abutment surface 14.

In accordance with an embodiment, said dragging surface 13 defines the radial seat 10 in the tangential direction C-C in particular in its support direction T or rotation direction opposite the direction V of the wheel in the direction of forward travel of the vehicle.

In accordance with an embodiment, said dragging surface 13 defines the radial seat 10 substantially with a plane transversal to the circumferential or tangential direction C-C and the opposite surface 14 is transversal to the tangential or circumferential direction C-C and on the opposite side defines the radial seat 10.

In accordance with an embodiment, said disc device 1 also comprises at least 2 bushings 15 each suitable for connecting to a connection portion 16 of a connection device 17, like for example, not for limiting purposes, a boss of a wheel of a motorcycle or alternatively a support bell of the disc device at a hub of a motor vehicle.

In accordance with an embodiment, each bushing 15 comprises at least one portion 18 that inserts into one of said radial seats 10 of the brake disc 2.

Preferably, said portion 18 of the bushing 15 inserts into the radial seat 10 of the brake disc 2 so as to move freely in the radial direction R-R and at the same time inserts into the seat so as to move freely in the tangential direction C-C leaving the brake disc 2 free to move in the axial direction A-A with respect to the bushing 15.

In accordance with an advantageous embodiment, between said radial seat 10 and said bushing 15 elastic means 19 are arranged.

In accordance with an embodiment, said elastic means 19 exert an elastic action in the tangential direction C-C between the bushing 15 and the radial seat 10 elastically influencing said bushing in abutment against said dragging surface 13.

Said elastic means 19 are substantially anchored to the radial seat 10 of the brake disc 2 and, thanks to their tangential elastic action, they create a controlled resistance action to the movement according to the axial direction A-A of the brake disc 2 with respect to the bushing 15, avoiding elastic thrusting or return actions of the brake disc 2 in the axial direction A-A.

In accordance with an embodiment, a screw 20, as a non-limiting example a stud bolt, is received in a seat 21 foreseen in the bushing 15 so as to connect said bushing 15 to the connection portion 16 of the connection device 17, as a non-limiting example screwing into a threaded seat 22 foreseen in the connection portion 16.

In accordance with an embodiment, said screw 20 has a head 23 and a support collar 24.

In accordance with an embodiment, said support collar 24 constitutes, with its surface 25 facing towards the threaded stem of the screw 26, an abutment surface for the brake disc 2, as a non-limiting example for the portion of the brake disc 2 that on the side opposite the connection device defines the edge 27 of the radial seat 10.

In accordance with an embodiment, when the screw 20 is inserted into the bushing 15 and rests on a screw-side axial abutment surface thereof 28 screwing into the threaded seat 22 of the connection portion 16, it axially defines the insertion portion into the radial seat 18 of the bushing 15, leaving a stroke in the axial direction A-A for the brake disc 2 fitted onto said bushing 15 with its seat 10 of greater size "D" with respect to the thickness "d" of the disc.

In other words, when the screw 20 is completely locked into the threaded seat 22 of the connection device 17, it tightly locks the bushing 15 against the connection portion 16 of the connection device 17 and with its support collar 24 defines an axial stroke "D" of the insertion portion 18 into the seat 10 of the bushing 15 of greater size with respect to the axial size "d" of the disc, and in particular of its connection portion 7 that defines the radial seat 10.

In accordance with an embodiment, said elastic means 19 are made so as to avoid a connection between them and the fastening means 20 of the bushing 15 to the connection device 17.

In accordance with an embodiment, said bushing 15 has shoulders 29 suitable for being arranged between the brake disc 2 and the connection portions 16 of the connection device 17 avoiding the wearing of the connection portions 16 during the operation of the disc device 1.

In accordance with an embodiment, said shoulders 29 are made in the form of a collar that defines the insertion portion into the radial seat 18 of the bushing 15 and forms an abutment surface 30 facing towards the brake disc 2 and an abutment surface 31 facing towards the connection portion 16.

In accordance with an embodiment, said collar 29 is arranged between the brake disc 2 and the connection portion 16 preventing any contact, sliding and wear between the brake disc 2 and the connection device 17.

In accordance with an embodiment, said radial seats 10 of the brake disc 2 are seats closed in the radial direction R-R and preferably but not necessarily defined by a radially inner edge 32 and a radially outer edge 33.

In accordance with an advantageous embodiment, said brake disc 2, the bushing 15 fitted with its insertion portion in the radial seat 18, the elastic means 19 arranged between the bushing 15 and the radial seat 10, constitute a braking kit or "spare part kit" for a braking system of a vehicle, for example a motorcycle.

Thanks to the elastic influencing action of the elastic means 19 arranged tangentially between the bushing 15 and the radial seat 10, the bushing 15 is in abutment against the dragging surface 13 and stays fixedly connected to the radial seat 10 in a well-defined operating position, even when the brake disc 2 together with the bushing 15 and the elastic means 19 are separate from the vehicle.

In accordance with an embodiment, said connection portion 7 of the brake disc 2 is defined radially and internally by an edge 35. Advantageously, according to an embodiment, said inner radial edge 35 of the connection portion 7 defines a centring surface for the brake disc 2.

In accordance with an embodiment, the brake disc 2 has a plurality of connection portions 7 equally circumferentially spaced apart C-C.

In accordance with an embodiment, each portion of said plurality of connection portions 7 defines a radial seat 10 suitable for receiving a bushing 15 and facing the connection portion 16 of connection devices 17.

In accordance with an embodiment, all of the connection portions of the plurality of connection portions have an inner radial edge 35 facing towards the rotation axis of the disc A-A and aligned on the same circumference having centre on the rotation axis A-A and defining a single centring surface of the brake disc 2 suitable for coupling on a reference surface foreseen on the connection device 17.

In accordance with the invention, said elastic means 19 are arranged between the bushing 15 and the radial seat 10 just at the opposite abutment surface 14 of the radial seat 10, so as to avoid the elastic means 19 being shaped so as to avoid elastically influencing the brake disc in the radial direction or arranged between the bushing and the dragging surface of the radial seat.

In accordance with an embodiment, the assembly consisting of the disc, the bushings and the elastic means constitutes a spare part kit that can easily be mounted to the connection or support devices of the disc or to the wheel. Indeed, the provision of the elastic means that avoid being arranged between the bushing and the dragging surface of the radial seat makes it possible to abut all of the bushings on the respective dragging surfaces and ensure their certain angular geometric mounting position that will always be aligned with the connection means, for example threaded holes foreseen on the connection devices, preventing a different elastic influence on different bushings between the bushing itself and its dragging surface from arranging them angularly offset with respect to the respective connection devices.

In accordance with an embodiment, the elastic means are shaped so as to avoid elastically influencing the brake disc 2 with respect to the bushing 15 both in the radial direction R-R and in the axial direction A-A.

In other words, in accordance with an embodiment, the elastic means 19 arranged between the bushing 15 and the radial seat 10 elastically influence the brake disc 2 with respect to the bushing 15 in the tangential direction C-C, whereas the elastic means 19 influence the relative movement of the brake disc 2 with respect to the bushing 15 in the radial direction R-R and axial direction A-A only indirectly as a function of the friction that is exerted between the radial seat 10 and the bushing 15 and/or between the elastic means 19 and the bushing 15.

In accordance with an embodiment the radial seat 10 has widened portions 36 or lobes that form areas for receiving the elastic means 19, making it possible to house elastic means 19 in the radial seat 10 that have greater dimensions with respect to the stroke S available in the radial seat 10 for the bushing 15.

In other words, in accordance with an embodiment, the radial seat 10 has a portion thereof that defines a radial stroke S in the radial seat for the bushing 15 of smaller dimensions in the radial direction R-R with respect to the extension of the radial seat at the elastic means 19 where lobes 36 are made that house portions of elastic means 19.

In accordance with an embodiment, the elastic means 19 are received with their end portions 37, 38 inside said lobes 36 and here are anchored to the radial seat 10.

In accordance with an embodiment, said radial seat comprises lobes that allow the insertion of elastic means 19 of greater size in the radial direction R-R with respect to that of the bushing 15 or of the stroke in the radial direction S of the bushing of the radial seat 10 or of the portion of the radial seat able to be crossed radially by the bushing 15.

In accordance with an embodiment, said elastic means 19 comprise a flat spring that comprises a central leaf portion 39 that exerts an elastic flexing action on the bushing 15, and portions 40 and 41 of contact and reaction of the spring 19 against the abutment surface 14 of the radial seat 10.

In accordance with an embodiment, said elastic means 19 comprise a flat spring having at least one end portion 37 or 38 for anchoring to the radial seat 10.

In accordance with an embodiment, said flat spring 19 comprises bent extensions coming out from the edge defining the radial seat 10 to abut in the axial direction A-A and anchor or hook the elastic means 19 to the edge of the radial seat 27.

In this way, the spare part kit consisting of the brake disc 2, the bushing 15, the elastic means 19 in which the bushing 15 is inserted in the radial seat 10 and elastically influenced against the dragging surface 13 interposing elastic means 19 between the bushing 15 and the radial seat 10 in its abutment surface 14, constitute a pre-assembled kit.

In accordance with an embodiment, said radial seat 10 is a seat that is open in the inner radial direction i.e. in the direction facing towards the rotation axis of the disc.

In accordance with an embodiment, at the free end of the bushing 42, the end in the axial direction A-A opposite the connection device 17, there is a collar 43 for fastening and caulking a washer 44.

In accordance with an embodiment, a washer 44 can be coupled with the free end 42.

In accordance with an embodiment, the free axial end 42 of the bushing 15 has a collar 43 of smaller dimensions than the diameter of the bushing 15 so as to leave an end abutment surface 45. A washer 44 is fitted onto the collar 43 of the bushing until its rests at the abutment surface for the washer 45.

In accordance with an embodiment, the collar 43 is upset or caulked, axially blocking the washer 44 firmly resting on the surface 45.

In accordance with an embodiment, the bushing 15 is fitted with its insertion portion 18 into the radial seat 10 projecting with its free end 42 from the opposite side of the brake disc 2 with respect to the connection device 17. The portion projecting from the disc of the bushing 15 has the abutment seat for the washer 45 and the washer seat collar 43 where the washer 44 is fitted, caulked here so that the brake disc 2 is arranged between the washer 44 and the collar or shoulder of the bushing 29.

In accordance with an embodiment, the washer 44 has a transversal dimension "Z" according to the tangential direction C-C that is greater than the circumferential extension "O" of the radial seat 10.

Thanks to the fact that the circumferential extension "O" of the washer 44 is greater than the circumferential extension "Z" of the radial seat 10, when the washer 44 is caulked and firmly connected to the bushing 15 fitted in the radial seat 10, the bushing 15 is fixedly connected free to move inside the radial seat 10 at the braking disc 2.

In accordance with an embodiment, the bushing 15 is inserted into the radial seat 10 after having inserted elastic means 19 into the seat, so that they elastically influence the bushing in the circumferential direction against the dragging surface 13 of the radial seat 10. The washer 44 is then firmly anchored to the free end 42 of the bushing 15 constituting a spare part kit formed from the brake disc 2, the bushing 15 and the interposed elastic means 19.

In accordance with an embodiment the disc device 1 has a caliper of the type with a fixed body 46 associated with it, comprising a vehicle-side elongated element 47 and a vehicle-outside elongated element 48, as well as at least one connection bridge 49.

Said fixed caliper body 46 on both sides of the brake disc 2 houses thrusting means 50 that bias pads, a first pad 11 and a second pad 12, against the braking surfaces 5, 6 of the disc body 3.

In accordance with an embodiment, the brake disc 2 fitted free to move in the axial direction A-A will slide axially with respect to the bushing 15 received in its seat 10 adapting its position to the braking action exerted by the pads 11, 12 acting on the braking surfaces 5, 6.

Irrespective of the thermal problems and from the possible different wearing of the pads 11 and 12, as well as the of the braking surfaces 5 and 6, the brake disc 2 thanks to its freedom of movement in the axial direction A-A will self-align with respect to the fixed caliper body 46 so as to reduce the vibration generated by possibly non-symmetry.

In accordance with an embodiment, the disc device 1 is associated with a floating caliper body 51 connected through guides 53 to a support element or bracket 52 for example to the suspension of the motorcycle.

In accordance with an embodiment, said floating caliper 51 has a thrusting element 50 for example arranged on the outside of the vehicle, which exerts a thrusting action on a first pad 12 abutting it against the second braking surface of the brake disc 2. The piston cylinder device 50 exerts a counter-thrust on the floating body that goes away from the bracket 52 pulling back the first pad 11, through the bridge portion 54, against the opposite braking surface 5 of the brake disc 2, exerting the desired braking action of the vehicle. Said disc device 1 is fixedly connected to the wheel and in particular to the connection device 17 through the radial seat 10 that allows the braking action to be transmitted in the tangential direction C-C. However, the brake disc 2 is axially free to move with respect to the bushing 15, self-centring with respect to the pads 11, 12 as a function of possible non-uniform wearing or geometric non-uniformities determined by the thermal deformation developed during the braking action that determines a rise in temperature of the components of the disc device 1.

In accordance with an embodiment, the brake disc 2 during its movement in the axial direction still stays separate from the connection device 17 thanks to the presence of the shoulder of the bushing 29.

In accordance with an embodiment, the disc device 1 is associated with a fixed caliper 55 equipped with thrusting means 50 on just the outside of the vehicle. Said fixed caliper 55 is preferably connected to a component of the suspension of the motorcycle.

By exerting a thrusting action, the thrusting means 50 thrust a second pad 12 to abut against the second braking surface 6 of the brake disc 2. The brake disc 2 biased by the pad 12 slides axially with its radial seat 10 along the bushing 15 until it abuts its opposite braking surface 5 against the first pad 11 that is fixed with respect to the caliper body 55.

The braking action is transmitted through the brake disc 2 to the bushing 15 that abuts against the dragging surface 13.

In the case of a fixed caliper 55 associated with a floating brake disc 2 the length of the insertion portion 18 into the radial seat 10 of the bushing 15 will be sufficient to allow the adequate stroke of the brake disc 2 during all of the wear of the friction material of the fixed pad 11.

The collar or shoulder 29 of the bushing 15 in any case avoids a wearing action between the brake disc 2 and the connection device 17 of the wheel of the vehicle.

As can be seen from the embodiments of the invention given above, the disc device 1 described is suitable both for use with fixed calipers, and with floating calipers and also for application of fixed calipers with thrusting elements on just one side and suitable for floating discs.

In all of these applications, the coupling between the radial seat 10 and the bushing 15 occurs by interposing an elastic element 19 that acts by elastically influencing just in the tangential direction C-C avoiding elastic thrusting in the axial direction A-A and thus allowing the brake disc 2 to self-centre with respect to the braking pads 11, 12. Jointly, the proposed solutions foresee the interposition between the brake disc and the connection device of a bushing.

The possibility of self-centring the brake disc 2 with respect to the pads 11, 12 allows the vibration phenomena present in the devices of the prior art to be reduced or entirely eliminated.

Moreover, thanks to the fact that the radial seat 10 has an extension in the radial direction R-R such as to allow a radial stroke of the brake disc 2 with respect to the bushing 15, in the case of thermal dilation caused by the increase in temperature produced with the generation of heat of the braking action, it is possible to compensate for the thermal dilation of the discs 2 avoiding the occurrence of deformations in the components of the disc device 1 that would create unwelcome malfunctions and vibrations of the device.

Thanks to the shoulder of the bushing 15 connected to the connection device 17, the wearing for example of the bosses and of the wheels of motorcycles generated by the deformation of the disc associated with them and of the devices of the prior art is avoided.

The provision of a brake disc 2 associated with a bushing with interposed elastic means suitable for abutting the bushing against a dragging surface of the seat of the disc 2 makes it possible to make a spare part kit in which the disc, bushing and spring components are preassembled in the factory and in any case have the elements for coupling with the connection device of the wheel of the motorcycle aligned, the bushings abutting against the dragging surfaces and thus making the operations of mounting and dismounting the disc device 1 extremely precise, safe and quick.

The provision of lobes 36 in the radial seat 10 makes it possible to use elastic elements 19 having a particularly long elastic portion, capable of facilitating the predefinition and the calibration of the elastic action to be exerted between the disc 2 and the bushing 15, allowing a better adjustment of the elastic action and of the friction action between the bushing and the disc.

The provision of a radial slot 10 closed in the inner radial direction of the disc 2 constitutes a preferred, although not necessary, embodiment, which ensures particular strength of the disc 2 also for particularly burdensome applications.

In accordance with an embodiment, the provision of a closed slot allows a centring surface for the disc to be made radially on the inside, which constitutes an abutment element for easier mounting of the disc on the connection devices to the wheel so as to immediately take the disc in coaxial position with the support means foreseen on the wheel.

Hereafter the process for mounting and dismounting the disc device 1 from the connection device 17 of the wheel will be described.

In the case in which a spare part kit is not used, the spring 19 is initially inserted inside the radial seat 10 arranging its ends 37, 38 and in the suitable lobes 36 taking the reaction portions of the leaf 40, 41 resting with on abutment surface of the seat 14. In this way the leaf portion of the flat spring will be raised from the abutment surface 14.

The bushing 15 is then inserted into the seat 10 fitting the seat onto the insertion portion 18 of the bushing 15.

In performing this operation the leaf portion of the flat spring 19 will be squashed or pressed against the abutment surface 14 of the seat 10.

The elastic means 19 will exert their elastic thrusting action on the bushing 15 abutting it against the opposite dragging surface 13 and defining a precise angular position of the bushing that will be angularly aligned with the connection portion 16 of the connection device 17.

When the disc device has been brought up to the connection portion 16, the bushing is fixed by inserting the screw 20 into the seat 21 of the bushing, screwing it into the threaded seat 22 of the connection device 17.

A man skilled in the art can bring modifications, adaptations and replacements of elements with other functionally equivalent ones to the embodiments of the device described above, in order to satisfy contingent requirements, without for this reason departing from the scope of the following claims.

In accordance with an embodiment, the elastic means 19 are made so as to avoid completely wrapping around the bushing 15. In accordance with an embodiment, the elastic means are arranged around the bushing for no more than half of its circumferential perimeter, preferably for less than half of the circumferential perimeter of the bushing.

**REFERENCES**

| | | | |
|---|---|---|---|
| 1 | disc device | 41 | second reaction portion of the leaf spring and radial seat support |
| 2 | brake disc | 42 | bushing free end opposite connection device |
| 3 | disc body | 43 | washer seat collar and washer calking |
| 4 | brake band | 44 | Washer |
| 5 | first braking surface | 45 | abutment surface for the washer |
| 6 | second opposite braking surface | 46 | fixed caliper |
| 7 | connection portions | 47 | vehicle-side elongated element |
| 8 | brake band inner radial edge | 48 | vehicle-outside elongated element |
| 9 | outer radial edge | 49 | connection bridges |
| 10 | radial seat | 50 | thrusting means |
| 11 | first pad | 51 | floating caliper |
| 12 | second pad | 52 | bracket |
| 13 | dragging surface | 53 | bracket guides |
| 14 | abutment surface | 54 | floating caliper bridge element |
| 15 | bushing | 55 | fixed caliper for a floating disc |
| 16 | connection portion | | |
| 17 | connection device | d | axial disc thickness |
| 18 | portion for inserting in the radial seat | T | support direction or direction opposite the rotation in forward motion of the vehicle |
| 19 | elastic means | V | forward motion direction |
| 20 | screw | D | axial stroke defined by the portion for insertion in the seat of the bushing |
| 21 | bushing seat | S | radial stroke carried out by the radial seat for the bushing |
| 22 | threaded seat | M | extension of the radial seat at the elastic means |
| 23 | screw head | A-A | rotation axis and axial direction |
| 24 | support collar | C-C | tangential direction |
| 25 | abutment surface | R-R | radial direction |
| 26 | threaded stem | 37 | end portion of the elastic means |
| 27 | edge of the radial seat | 38 | second end portion of the elastic means |
| 28 | abutment surface of the bushing | 39 | flat spring leaf portion |
| 29 | shoulder bushing - collar | 40 | reaction portion of the leaf and radial seat support |
| 30 | abutment surface of the shoulder for the brake disc | 36 | widened portions of the seat or lobes |
| 31 | abutment surface of the shoulder for the connection portion | | |
| 32 | inner radial edge of radial seat | | |
| 33 | radially outer edge of the radial seat | | |
| 34 | radially inner edge of the connection portion | | |
| 35 | centring edge of the connection portions | | |

## Claims

1. Disc braking device (1) comprising:
- a brake disc (2) having an axial-symmetrical body (3) with respect to a rotation axis (A-A) thereof;
- said body (3) comprising a brake band (4) defining opposite braking surfaces (5, 6);
- said body (3) comprising at least two connection portions (7) of the brake disc (2) to a connection device (17) of a vehicle;
- said brake band (4) defining an axial direction (A-A) parallel to its rotation axis, a tangential direction (C-C) parallel to one of the braking surfaces and a radial direction (R-R) perpendicular to the tangential direction (C-C) and to the axial direction (A-A);
- said brake band (4) comprising at least two radial seats (10) that each define a dragging surface (13), arranged in the axial direction so as to define a surface suitable for receiving a thrusting action directed in the tangential direction;
- said radial seat (10) also defines an opposite abutment surface (14) substantially parallel to said dragging surface (13);
- said disc braking device also comprises at least two bushings (15), each bushing (15) being suitable for connecting to a connection portion (16) of said connection device (17);
- each of said bushings (15) comprising at least one portion (18) that is inserted into said radial seat (10) of the brake disc (2) so as to be free to move in the radial direction (R-R);
- said braking device (1) also comprises elastic means (19) arranged between the radial seat (10) and said bushing (15);
- said elastic means (19) being substantially anchored to the radial seat (10) of the brake disc (2) and creating a predetermined resistance action suitable for controlling the axial movement (A-A) of the brake disc (2) with respect to the bushing (15), at the same time avoiding elastic return or elastic thrusting actions in the axial direction (A-A) to the brake disc (2);
**characterised in that**
- each of said bushings (15) comprises at least one portion (18) that is inserted in said radial seat (10) of the brake disc (2) so as to be free to move in tangential direction (C-C) so as to leave the brake disc (2) free to move in the axial direction (A-A) with respect to the bushing (15);
- said elastic means (19) are arranged between the bushing (15) and the radial seat (10) just at the opposite abutment surface (14) of the radial seat (10), so as to avoid the elastic means (19) being shaped so as to avoid elastically influencing the brake disc in the radial direction (R-R) or arranged between the bushing (15) and the dragging surface (13) of the radial seat (10);
- said elastic means (19) exerting an elastic action in the tangential direction (C-C) between the bushing (15) and the radial seat (10), influencing said bushing (15) in abutment directly against said dragging surface (13).

2. Disc braking device (1) according to claim 1, wherein said elastic means (19) comprise a flat spring having an end portion for anchoring to the radial seat (10) and wherein said elastic means (19) are made so as to avoid them substantially wrapping around the bushing (15).

3. Disc braking device (1) according to any one of the previous claims, wherein said bushing (15) has shoulders (29) suitable for being arranged between the brake disc (2) and the connection device (17), avoiding the wearing of the connection portion (16) of the connection device (17).

4. Disc braking device (1) according to any one of the previous claims, wherein said radial seats (10) are closed in the radial direction (R-R) facing the rotation axis of the brake disc (2).

5. Disc braking device according to any one of the previous claims, wherein each of said bushings (15) has a hollow body suitable for receiving a fastening screw (20) of the bushing to the connection portions (16) of the connection device (17).

6. Disc braking device (1) according to any one of the previous claims, wherein said radial seat (10) has widened portions or lobes (36) that receive portions of the elastic means (19).

7. Disc braking device (1) according to any one of the previous claims, wherein said elastic means comprise a flat spring comprising a portion that exerts an elastic flexing action on the bushing and portions of contact and reaction with the radial seat.

8. Disc braking device (1) according to any one of the previous claims, wherein said elastic means (19) are made so as to avoid a direct connection between them and fastening means (20) of the bushing to the connection device (17).

9. Disc braking device (1) according to any one of the previous claims, wherein said radial seat (10) is an open seat in the inner radial direction, i.e. towards the rotation axis of the brake disc (2).

10. Disc braking device (1) according to any one of the previous claims, wherein a washer (44) is caulked to the bushing (15) defining a stroke limit of the brake disc (2) and fixedly connecting the bushing (15) to the radial seat (10) on the opposite side to the connection device (17).

11. Spare part kit comprising a disc braking device as defined in any one of claims 1 to 10, wherein said bushings (15) and said elastic means (19) are pre-assembled in said radial seats (10) separately from a wheel of a vehicle.

12. Braking system, comprising a disc braking device (1) as defined by any one of the previous claims 1 to 10, wherein the brake disc (2) has a fixed caliper (46) associated with it, comprising opposite thrusting means (50) suitable for exerting a braking action through pads (11, 12) on the opposite braking surfaces (5, 6).

13. Braking system, comprising a disc braking device (1) as defined by any one of claims 1 to 10, wherein the brake disc (2) has a floating caliper (51) associated with it, comprising thrusting means (50) on just the outside of the vehicle and floating body on a fixed bracket, suitable for exerting a braking action through pads (11, 12) on the opposite braking surfaces (5, 6).

14. Braking system, comprising a disc braking device (1) as defined by any one of claims 1 to 10, wherein the brake disc (2) has a fixed caliper (55) associated with it, comprising thrusting means (50) on just the outside of the vehicle and fixed body suitable for exerting a braking action through pads (11, 12) on the opposite braking surfaces (5, 6) through the axial sliding of the brake disc (2) with respect to the bushing (15) received in the radial seat (10).

## Patentansprüche

1. Scheibenbrems-Vorrichtung (1), umfassend:
- eine Bremsscheibe (2), welche einen bezüglich einer Rotationsachse (A-A) davon axialsymmetrischen Körper (3) aufweist;
- wobei der Körper (3) ein Bremsband (4) umfasst, welches gegenüberliegende Bremsflächen (5, 6) definiert;
- wobei der Körper (3) wenigstens zwei Verbindungsabschnitte (7) der Bremsscheibe (2) zu einer Verbindungsvorrichtung (17) eines Fahrzeugs umfasst;
- wobei das Bremsband (4) eine Axialrichtung (A-A) parallel zu seiner Rotationsachse, eine Tangentialrichtung (C-C) parallel zu einer der Bremsflächen und eine Radialrichtung (R-R) senkrecht zu der Tangentialrichtung (C-C) und der Axialrichtung (A-A) definiert;
- wobei das Bremsband (4) wenigstens zwei radiale Sitze (10) umfasst, welche jeweils eine Reibfläche (13) definieren, welche in der Axialrichtung derart angeordnet sind, dass eine Fläche definiert wird, welche dazu geeignet ist, eine in die Tangentialrichtung gerichtete Schubwirkung aufzunehmen;
- wobei der Radialsitz (10) ebenfalls eine gegenüberliegende Anlagefläche (14) im Wesentlichen parallel zu der Reibfläche (13) definiert;
- wobei die Scheibenbrems-Vorrichtung ebenfalls wenigstens zwei Hülsen (15) umfasst, wobei jede Hülse (15) für eine Verbindung mit einem Verbindungsabschnitt (16) der Verbindungsvorrichtung (17) geeignet ist;
- wobei jede der Hülsen (15) wenigstens einen Abschnitt (18) umfasst, welcher in den Radialsitz (10) der Scheibenbremse (2) derart eingeführt ist, dass er frei ist, sich in der Radialrichtung (R-R) zu bewegen;
- wobei die Bremsvorrichtung (1) ebenfalls elastische Mittel (19) umfasst, welche zwischen dem Radialsitz (10) und der Hülse (15) angeordnet sind;
- wobei die elastischen Mittel (19) im Wesentlichen an dem Radialsitz (10) der Bremsscheibe (2) verankert sind und eine vorbestimmte Widerstandswirkung erzeugen, welche zum Steuern/Regeln der Axialbewegung (A-A) der Bremsscheibe (2) bezüglich der Hülse (15) geeignet ist, wobei gleichzeitig elastische Rückstell- oder elastische Schubwirkungen in der Axialrichtung (A-A) auf die Bremsscheibe (2) verhindert werden;
**dadurch gekennzeichnet, dass**
- jede der Hülsen (15) wenigstens einen Abschnitt (18) umfasst, welcher in den Radialsitz (10) der Bremsscheibe (2) derart eingeführt ist, dass sie sich in Tangentialrichtung (C-C) bewegen kann, um die Bremsscheibe (2) frei zu lassen, sich in der Axialrichtung (A-A) bezüglich der Hülse (15) zu bewegen;
- wobei die elastischen Mittel (19) zwischen der Hülse (15) und dem Radialsitz (10) genau an der gegenüberliegenden Anlagefläche (14) des Radialsitzes (10) angeordnet sind, um zu verhindern, dass die elastischen Mittel (19) derart geformt sind, dass verhindert wird, dass sie die Bremsscheibe in der Radialrichtung (R-R) beeinflussen oder zwischen der Hülse (15) und der Reibfläche (13) des Radialsitzes (10) angeordnet sind;
- wobei die elastischen Mittel (19) eine elastische Wirkung in der Tangentialrichtung (C-C) zwischen der Hülse (15) und dem Radialsitz (10) ausüben, wodurch die Hülse (15) in Anlage direkt gegen die Reibfläche (13) beeinflusst wird.

2. Scheibenbrems-Vorrichtung (1) nach Anspruch 1, wobei die elastischen Mittel (19) eine Blattfeder umfassen, welche einen Endabschnitt zum Verankern an dem Radialsitz (19) umfassen, und wobei die elastischen Mittel (19) derart hergestellt sind, dass verhindert wird, das sie sich im Wesentlichen um die Hülse (15) wickeln.

3. Scheibenbrems-Vorrichtung (1) nach einem der vorhergehenden Ansprüche, wobei die Hülse (15) Schultern (29) aufweist, welche dazu geeignet sind, zwischen der Bremsscheibe (2) und der Verbindungsvorrichtung (17) angeordnet zu werden, wobei die Abnutzung des Verbindungsabschnitts (16) der Verbindungsvorrichtung (17) verhindert wird.

4. Scheibenbrems-Vorrichtung (1) nach einem der vorhergehenden Ansprüche, wobei die Radialsitze (10) in der Radialrichtung (R-R) zu der Rotationsachse der Bremsscheibe (2) weisend geschlossen sind.

5. Scheibenbrems-Vorrichtung nach einem der vorhergehenden Ansprüche, wobei jede der Hülsen (15) einen hohlen Körper aufweist, welcher dazu geeignet ist, eine Befestigungsschraube (20) der Hülse an die Verbindungsabschnitte (16) der Verbindungsvorrichtung (17) aufzunehmen.

6. Scheibenbrems-Vorrichtung (1) nach einem der vorhergehenden Ansprüche, wobei der Radialsitz (10) aufgeweitete Abschnitte oder Flügel (36) aufweist, welche Abschnitte der elastischen Mittel (19) aufnehmen.

7. Scheibenbrems-Vorrichtung (1) nach einem der vorhergehenden Ansprüche, wobei die elastischen Mittel eine Blattfeder umfassen, welche einen Abschnitt umfasst, welcher mit dem Radialsitz eine elastische Biegekraft auf die Hülse und Kontakt-und Reaktions-Abschnitte ausübt.

8. Scheibenbrems-Vorrichtung (1) nach einem der vorhergehenden Ansprüche, wobei die elastischen Mittel (19) derart hergestellt sind, dass eine direkte Verbindung zwischen ihnen und Befestigungsmitteln (20) der Hülse und der Verbindungsvorrichtung (17) vermieden wird.

9. Scheibenbrems-Vorrichtung (1) nach einem der vorhergehenden Ansprüche, wobei der Radialsitz (10) ein offener Sitz in der Richtung radial nach innen, d.h. in Richtung der Rotationsachse der Bremsscheibe (2) ist.

10. Scheibenbrems-Vorrichtung (1) nach einem der vorhergehenden Ansprüche, wobei eine Distanzscheibe (44) gegen die Hülse (15) verstemmt ist, welche eine Hubgrenze der Bremsscheibe (2) definiert und die Hülse (15) mit dem Radialsitz (10) an der gegenüberliegenden Seite zu der Verbindungsvorrichtung (17) fest verbindet.

11. Ersatzteil-Baugruppe umfassend eine Scheibenbrems-Vorrichtung nach einem der Ansprüche 1 bis 10, wobei die Hülsen (15) und die elastischen Mittel (19) in den Radialsitzen (10) getrennt von einem Rad eines Fahrzeugs vormontiert sind.

12. Bremssystem, umfassend eine Scheibenbrems-Vorrichtung (1) nach einem der vorhergehenden Ansprüche 1 bis 10, wobei die Bremsscheibe (2) einen ihr zugeordneten festen Bremssattel (46) aufweist, umfassend gegenüberliegende Schubmittel (50), welche dazu geeignet sind, eine Bremswirkung durch Backen (11, 12) auf die gegenüberliegenden Bremsflächen (5, 6) auszuüben.

13. Bremssystem, umfassend eine Scheibenbrems-Vorrichtung (1) nach einem der Ansprüche 1 bis 10, wobei die Bremsscheibe (2) einen ihr zugeordneten schwimmenden Bremssattel (51) aufweist, umfassend Schubmittel (50) genau an der Außenseite des Fahrzeugs und einen Schwimmkörper an einer festen Klammer, welche geeignet sind, eine Bremswirkung durch Backen (11, 12) auf die gegenüberliegenden Bremsflächen (5, 6) auszuüben.

14. Bremssystem, umfassend eine Scheibenbrems-Vorrichtung (1) nach einem der Ansprüche 1 bis 10, wobei die Bremsscheibe (2) einen ihr zugeordneten festen Bremssattel (55) aufweist, umfassend Schubmittel (50) genau an der Außenseite des Fahrzeugs und einen festen Körper, welcher dazu geeignet ist, eine Bremswirkung durch Backen (11, 12) auf die gegenüberliegenden Bremsflächen (5, 6) durch das axiale Gleiten der Bremsscheibe (2) bezüglich der in dem Radialsitz (10) aufgenommenen Hülse (15) auszuüben.

## Revendications

1. Dispositif de freinage à disque (1) comprenant :
un disque de frein (2) comportant un corps (3) à symétrie axiale par rapport à un axe de rotation (A-A) de celui-ci ;
ledit corps (3) comprenant une bande de frein (4) définissant des surfaces de freinage opposées (5, 6)
ledit corps (3) comprenant au moins deux parties de liaison (7) du disque de frein (2) à un dispositif de liaison (17) d'un véhicule ;
ladite bande de frein (4) définissant une direction axiale (A-A) parallèle à son axe de rotation, une direction tangentielle (C-C) parallèle à l'une des surfaces de freinage et une direction radiale (R-R) perpendiculaire à la direction tangentielle (C-C) et à la direction axiale (A-A) ;
ladite bande de frein (4) comprenant au moins deux sièges radiaux (10) qui définissent chacun une surface de traînée (13), agencée dans la direction axiale de façon à définir une surface convenable pour recevoir une action de poussée dirigée dans la direction tangentielle ;
ledit siège radial (10) définit aussi une surface de butée opposée (14) sensiblement parallèle à ladite surface de traînée (13) ;
ledit dispositif de frein à disque comprend au moins deux bagues (15), chaque bague (15) convenant pour la liaison à une partie de liaison (16) dudit dispositif de liaison (17) ;
chacune desdites bagues (15) comprenant au moins une partie (18) qui est insérée dans ledit siège radial (10) du disque de frein (2) de façon à être libre de se déplacer dans la direction radiale (R-R) ;
ledit dispositif de freinage (1) comprend aussi des moyens élastiques (19) agencés entre le siège radial (10) et ladite bague (15) ;
lesdits moyens élastiques (19) étant ancrés sensiblement sur le siège radial (10) du disque de frein (2) et créant une action de résistance prédéterminée convenant pour commander le déplacement axial (A-A) du disque de frein (2) par rapport à la bague (15), évitant dans le même temps un retour élastique ou des actions de poussée élastique dans la direction axiale (A-A) sur le disque de frein (2) ;
**caractérisé en ce que**
chacune desdites bagues (15) comprend au moins une partie (18) qui est insérée dans ledit siège radial (10) du disque de frein (2) de façon à être libre de se déplacer dans une direction tangentielle (C-C) de façon à laisser le disque de frein (2) libre de se déplacer dans la direction axiale (A-A) par rapport à la bague (15) ;
lesdits moyens élastiques (19) sont agencés entre la bague (15) et le siège radial (10) juste au niveau de la surface de butée opposée (14) du siège radial (10), de façon à éviter que les moyens élastiques (19) soit formés pour éviter d'influencer le disque de frein dans la direction radiale (R-R) ou agencés entre la bague (15) et la surface de traînée (13) du siège radial (10) ;
lesdits moyens élastiques (19) exerçant une action élastique dans la direction tangentielle (C-C) entre la bague (15) et le siège radial (10), influençant ladite bague (15) en butée directement contre ladite surface de traînée (13).

2. Dispositif de freinage à disque (1) selon la revendication 1, dans lequel lesdits moyens élastiques (19) comprennent un ressort plat comportant une partie d'extrémité pour ancrage au siège radial (10) et dans lequel lesdits moyens élastiques (19) sont faits de façon à leur éviter d'être enroulés sensiblement autour de la bague (15).

3. Dispositif de freinage à disque (1) selon l'une quelconque des revendications précédentes, dans lequel ladite bague (15) comporte des épaulements (29) convenant pour être agencés entre le disque de frein (2) et le dispositif de liaison (17), évitant l'usure de la partie de liaison (16) du dispositif de liaison (17).

4. Dispositif de freinage à disque (1) selon l'une quelconque des revendications précédentes, dans lequel lesdits sièges radiaux (10) sont fermés dans la direction radiale (R-R) faisant face à l'axe de rotation du disque de frein (2).

5. Dispositif de freinage à disque selon l'une quelconque des revendications précédentes, dans lequel chacune desdites bagues (15) comporte un corps creux convenant pour recevoir une vis de fixation (20) de la bague sur les parties de liaison (16) du dispositif de liaison (17).

6. Dispositif de freinage à disque (1) selon l'une quelconque des revendications précédentes, dans lequel ledit siège radial (10) comporte des parties élargies ou lobes (36) qui reçoivent des parties des moyens élastiques (19).

7. Dispositif de freinage à disque (1) selon l'une quelconque des revendications précédentes, dans lequel lesdits moyens élastiques comprennent un ressort plat comprenant une partie qui exerce une action de flexion élastique sur la bague et des parties de contact et de réaction avec le siège radial.

8. Dispositif de freinage à disque (1) selon l'une quelconque des revendications précédentes, dans lequel lesdits moyens élastiques (19) sont faits de façon à éviter une liaison directe entre eux et des moyens de fixation (20) de la bague sur le dispositif de liaison (17).

9. Dispositif de freinage à disque (1) selon l'une quelconque des revendications précédentes, dans lequel ledit siège radial (10) est un siège ouvert dans la direction radiale intérieure, c'est à dire vers l'axe de rotation du disque de frein (2).

10. Dispositif de freinage à disque (1) selon l'une quelconque des revendications précédentes, dans lequel une rondelle (44) est matée sur la bague (15) définissant une limite de course du disque de frein (2) et reliant de manière fixe la bague (15) au siège radial (10) sur le côté opposé au dispositif de liaison (17).

11. Kit de rechange comprenant un dispositif de freinage à disque selon l'une quelconque des revendications 1 à 10, dans lequel lesdites bagues (15) et lesdits moyens élastiques (19) sont pré-assemblés dans lesdits sièges radiaux (10) séparément d'une roue d'un véhicule.

12. Système de freinage, comprenant un dispositif de freinage à disque (1) selon l'une quelconque des revendications 1 à 10, dans lequel le disque de frein (2) comporte un étrier fixe (46) qui lui est associé, comprenant des moyens de poussée opposés (50) convenant pour exercer une action de freinage par l'intermédiaire de patins (11, 12) sur les surfaces de freinage opposées (5, 6).

13. Système de freinage, comprenant un dispositif de freinage à disque (1) selon l'une quelconque des revendications 1 à 10, dans lequel le disque de frein (2) comporte un étrier flottant (51) qui lui est associé, comprenant des moyens de poussée (50) sur juste l'extérieur du véhicule et un corps flottant sur un support fixe, convenant pour exercer une action de freinage par l'intermédiaire de patins (11, 12) sur les surfaces de freinage opposées (5, 6).

14. Système de freinage, comprenant un dispositif de freinage à disque (1) selon l'une quelconque des revendications 1 à 10, dans lequel le disque de frein (2) comporte un étrier fixe (55) qui lui est associé, comprenant des moyens de poussée (50) sur juste l'extérieur du véhicule et un corps fixe, convenant pour exercer une action de freinage par l'intermédiaire de patins (11, 12) sur les surfaces de freinage opposées (5, 6) par le coulissement axial du disque de frein (2) par rapport à la bague (15) reçue dans le siège radial (10).
